# EUROPÄISCHE PATENTSCHRIFT

(11) **EP 0 954 427 B1**
(45) Veröffentlichungstag und Bekanntmachung des Hinweises auf die Patenterteilung: **12.09.2001**
(21) Anmeldenummer: 98904082.9
(22) Anmeldetag: 16.01.1998
(51) Int. Cl.: B29C 45/17

(54) **KUNSTSTOFFSPRITZGIESSVORRICHTUNG FÜR KUNSTSTOFFTEILE MIT HOHLRÄUMEN**
PLASTIC INJECTION MOULDING DEVICE FOR PLASTIC PIECES WITH BLOWHOLES
SYSTEME DE MOULAGE PAR INJECTION DE PLASTIQUE POUR PIECES PLASTIQUES COMPORTANT DES CAVITES

(30) Priorität: 23.01.1997 DE 19702236
(43) Veröffentlichungstag der Anmeldung: 10.11.1999
(73) Patentinhaber: PERSTORP PLASTIC SYSTEMS AB, 28480 Perstorp (SE)
(72) Erfinder: OLSCHEWSKI, Karl, Heinz, D-58540 Meinerzhagen (DE)
(74) Vertreter: Cohausz, Helge B., Dipl.-Ing.
(86) Internationale Anmeldenummer: EP9800228
(87) Internationale Veröffentlichungsnummer: WO9832581

(56) Entgegenhaltungen:
- DE-A- 4 102 319
- DE-A- 4 336 243
- DE-A- 19 515 741

## Beschreibung

Die Erfindung betrifft eine Vorrichtung zum Spritzgießen von Kunststoffteilen mit mindestens einem Hohlraum, der durch Eindrücken von Gas entsteht, das die Kunststoffschmelze aus dem Hohlraumbereich über einen in der Form angeordneten Kanal, der sich vom Hohlraumbereich hin zur Nebenkavität stetig insbesondere konisch erweitert, in eine Nebenkavität drückt.

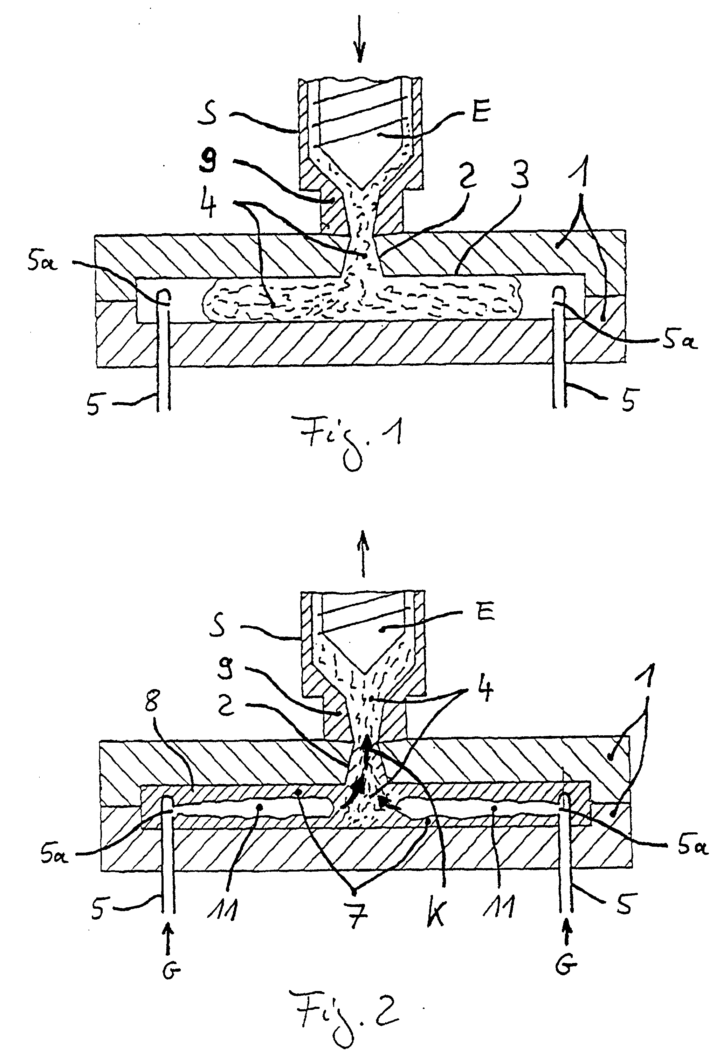

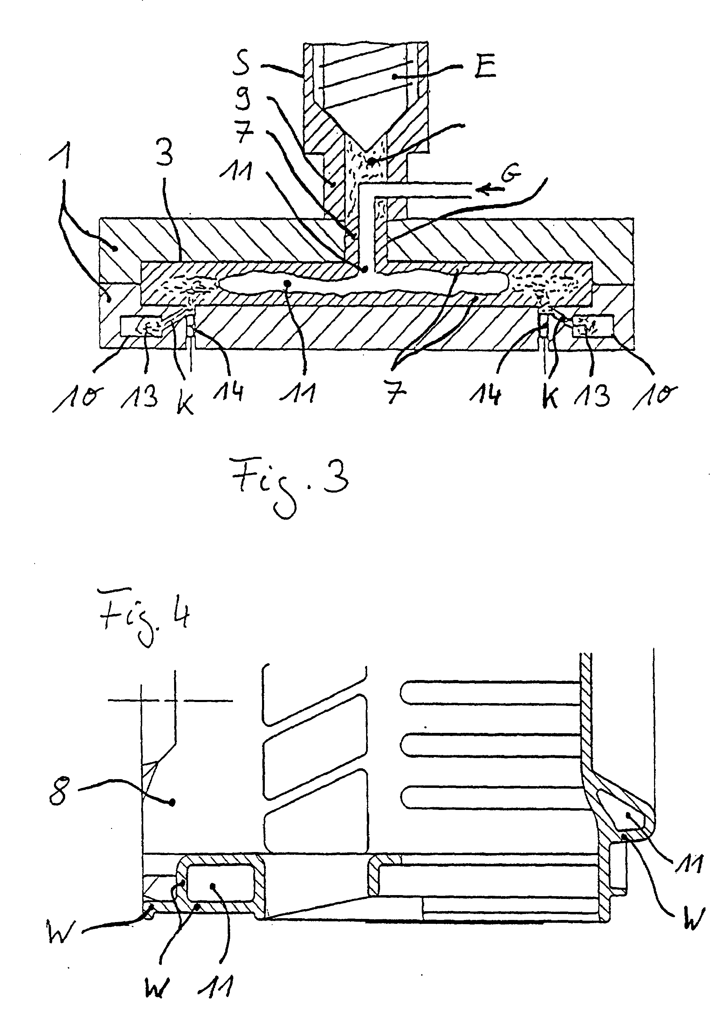

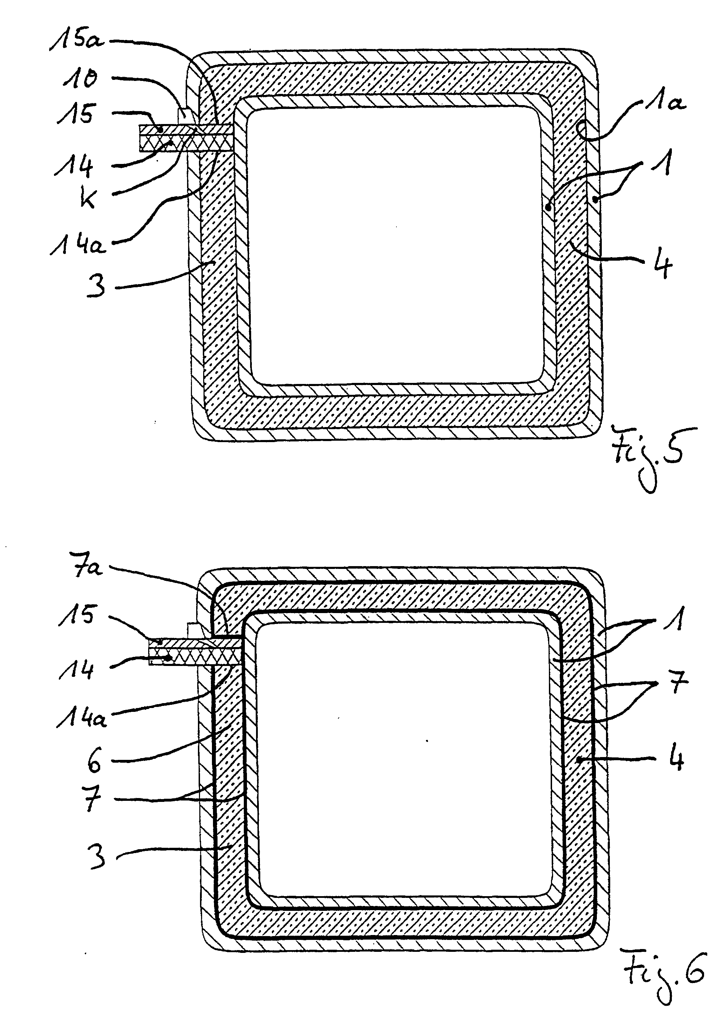

Die Technik, die einer solchen Vorrichtung zugrundeliegt, ist u.a. aus der DE 39 13 109 bekannt und wird durch deren Figuren 1 bis 3 dargestellt. Wie in Figur 1 gezeigt, wird in ein Werkzeug 1, das einen Angußkanal 2 und einen Formhohlraum 3 aufweist, eine fließfähige Kunststoffschmelze 4 eingespritzt. Das Werkzeug 1 weist zudem zusätzliche Düsen 5 zum Einspritzen eines Gases G auf. Mittels des Gases G wird die noch plastische Seele 6 des eingespritzten Kunststoffes 4, wie in Figur 2 dargestellt, durch den Angußkanal 2 in eine außerhalb des freien Hohlraumes 3 liegende, aber mit ihm verbundene Nebenkavität 10 zur Aufnahme der auszutreibenden fließfähigen Kunststoffschmelze 4, herausgedrückt. Derartige Vorrichtungen zum Erzeugen von Hohlräumen 11 in Kunststoffteilen 8 sind zudem auch aus anderen Veröffentlichungen bekannt. Den bekannten Vorrichtungen ist größten Teils gemeinsam, daß die noch fließfähige Seele 6 des eingespritzten Kunststoffmaterials, wie in Figur 3 dargestellt, durch das Gas G über Kanäle K in Nebenkavitäten 10 gedrückt wird.

Nach Abschluß des Spritzvorganges vergeht bis zum nächsten Spritzvorgang eine gewisse Zeit, in der das soeben gespritzte Kunststoffteil aus der Vorrichtung entnommen und das Spritzwerkzeug gesäubert wird. In dieser Zeit kühlt sich der in den Kanälen K noch vorhandene Kunststoff ab und erhärtet. Durch den Druck des eingedrückten Gases G beim nächsten Spritzvorgang muß der erhärtete Kunststoff aus den Kanälen K herausgedrückt werden, so daß die noch flüssige Kunststoffschmelze durch die Kanäle in die Nebenkavitäten gelangen kann.

Nachteilig bei diesen bekannten Vorrichtungen ist, daß durch die Form der Kanäle der nach dem Spritzvorgang verbliebene und bis zum nächsten Spritzvorgang in den Kanälen erhärtete Kunststoff sich meist schwer herauslöst, so daß es leicht zu einer Verstopfung der Kanäle kommt. Die Qualität der nachfolgenden Spritzgießvorgänge verschlechtert sich dadurch nachhaltig. Wird nur ein Kanal zur Verbindung des Formhohlraumes mit der Nebenkavität verwendet, so ist bei einem Verstopfen des Kanals ein Eindrücken bzw, Einblasen des Gases nicht mehr möglich. In diesem Fall muß der Spritzvorgang abgebrochen werden und das gerade im Werkzeug befindliche Kunststoffteil ist Ausschuß. Die Kanäle müssen in jedem Fall per Hand von dem erkalteten Kunststoff befreit werden, wodurch sich die Standzeit der Vorrichtung nachteilig erhöht.

Um eine Vorrichtung bereitzustellen, bei der ein Verstopfen der Kanäle zwischen Formhohlraum und Nebenkavität verhindert wird, wurde vorgeschlagen, daß sich der Kanal vom Hohlraumbereich hin zur Nebenkavität stetig insbesondere konisch erweitert, wie es zum Beispiel aus der DE 41 02 319 bekannt ist. Durch die sich hin zur Nebenkavität erweiternde Öffnung des Kanals, wird vorteilhaft eine Reduktion der Reibung zwischen den Kanalwänden und dem im Kanal gehärteten Kunststoff erzielt. Hierdurch genügt schon eine sehr kleine Kraft, um den gehärteten Kunststoffpfropfen aus dem Kanal in Richtung Nebenkavität zu drücken. Diese Kraft wird problemlos mittels des eingedrückten Gases über die noch plastische Seele des Kunststoffteils auf den Pfropfen ausgeübt. Diese Ausdrückkraft ist dabei wesentlich kleiner, als die Kraft, die aufzuwenden wäre, um die schon gehärteten Kunststoffmassen, die die späteren Wände des Kunststoffteils bilden, nachhaltig zu verformen.

Auch wurde zum Beispiel in der DE 43 36 243 vorgeschlagen, daß der Kanal vorteilhafterweise in einem Schieber angeordnet ist, der in das Innere der Form hineinragt und nach dem Eindrücken von Gas aus dem Inneren herausziehbar ist. Durch das Herausziehen des Schiebers, kann vorteilhaft eine glatte und geschlossene Außenwand für das Kunststoffteil erzielt werden. Die Stirnwand des Schiebers bildet dabei für das Ende der Gaseindrückphase die Werkzeuginnenwand. Der Teil der noch flüssigen Seele, der noch nicht über den Kanal in die Nebenkavität herausgetreten ist, wird, nachdem der Schieber gänzlich aus dem Formhohlraum herausgezogen ist, gegen die Stirnseite des Schiebers gedrückt und bildet die Wand des Hohlraums des Kunststoffteils.

Dabei ist es jedoch wichtig, daß der flüssige Kunststoff nicht schon während des Einspritzvorgangs durch den Kanal in die Nebenkavität gelangen kann.

Aufgabe der vorliegenden Erfindung ist es daher, eine konstruktiv einfache, preiswerte und leicht handhabbare Vorrichtung der eingangs genannten Art bereitzustellen, bei der die zuvor aufgeführten Nachteile vermieden werden und bei der bei einer glatten und geschlossenen Außenwand des Kunststoffteils der Kanal während des Einspritzvorgangs des flüssigen Kunststoffs vor einem vorzeitigen Eindringen des Kunststoffs gesichert ist.

Diese Aufgabe wird erfindungsgemäß dadurch gelöst, daß der

Kanal in einem ersten Schieber angeordnet ist, der in das Innere der Form hineinragt und nach dem Eindrücken von Gas aus dem Inneren herausziehbar ist und daß neben dem ersten Schieber ein zweiter Schieber liegt, der zum Verschließen des Kanals in das Innere der Form hineinragt und aus dem Inneren herausziehbar ist.

Auf diese Weise ist der Kanal während des Einspritzvorgangs verschlossen und das vorzeitige Eindringen von flüssigem Kunststoff ist ausgeschlossen. Eine besonders glatte geschlossene Außenwand des fertigen Kunststoffteils ist auf einfache Weise zu erreichen. Besonders vorteilhaft ist dabei, daß der Schieber nach Ablauf eines vorbestimmten Zeitintervalls, das die spätere Dicke der Hohlraumwandungen des Kunststoffteils bestimmt, nach Abschluß des Einspritzvorgangs aus dem Formhohlraum gezogen wird, wodurch die Kanalöffnung im Formhohlraum geöffnet wird. Die flüssige Seele kann nun über den Kanal in die Nebenkavität gelangen.

Nachfolgend wird ein bevorzugtes Ausführungsbeispiel der Erfindung anhand von Zeichnungen näher erläutert.

Es zeigen:
- Fig. 1-3: Eine Spritzvorrichtung gemäß des Standes der Technik wie er u.a. durch die DE 39 13 109 offenbart ist;
- Fig. 4: Kunststoffteil mit Hohlräumen;
- Fig. 5: erfindungsgemäße Einspritzvorrichtung während des Einspritzens des flüssigen Kunststoffs;
- Fig. 6: erfindungsgemäße Einspritzvorrichtung nach Ablauf des vorbestimmten Abkühlintervalls;
- Fig. 7: Gaseindrückphase der erfindungsgemäßen Einspritzvorrichtung; der Verschlußschieber ist aus dem Formhohlraum herausgezogen;
- Fig. 8: Abschluß des Gaseindrückvorgangs.

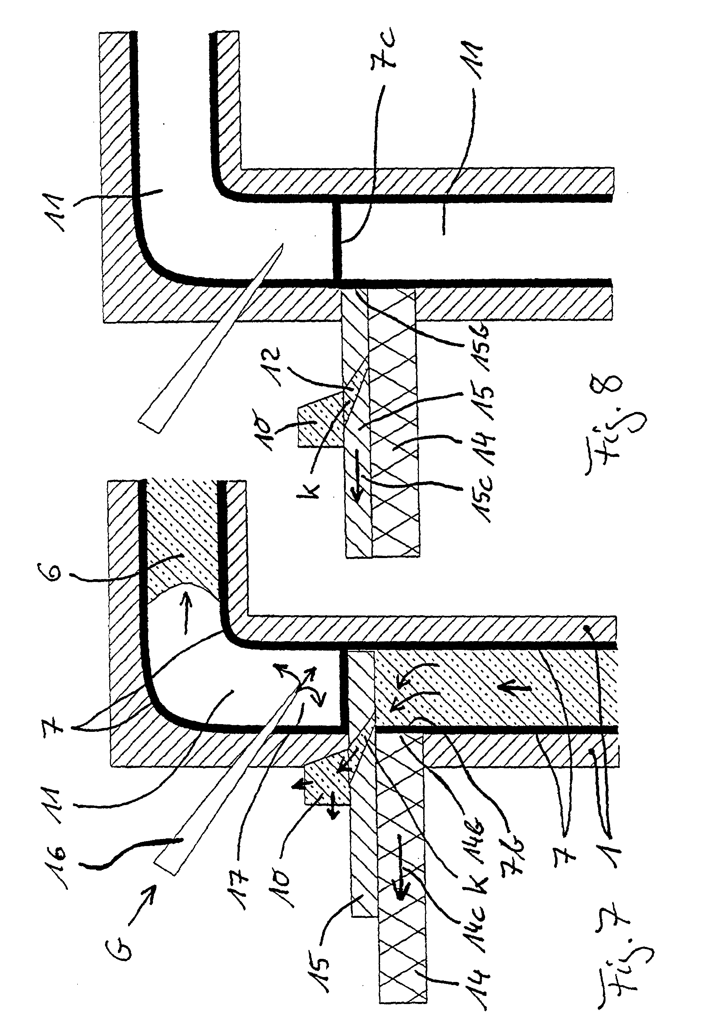

Die Figur 4 zeigt ein Kunststoffteil 8, welches Hohlräume 11 aufweist, die durch die Kunststoffwände W gebildet sind. Dieses Kunststoffteil 8 kann u.a. mit der erfindungsgemäßen Vorrichtung, die anhand der Figuren 5 bis 8 nachfolgend erläutert wird, erzeugt werden.

Die Figur 5 zeigt ein Werkzeug 1, das einen Formhohlraum 3 bildet, in den fließfähige Kunststoffschmelze 4 mittels einer nicht dargestellten Einspritzvorrichtung in Form einer Düse, wie sie z.B. in Figur 1 dargestellt ist, einspritzbar ist. Während des Einspritzvorgangs sind die beiden Schieber 14,15 in den Formhohlraum 3 eingeschoben, wodurch der durchlaufende Formhohlraum 3 unterbrochen ist und die Öffnung des Kanals K durch den Schieber 14 verschlossen ist. Die Schieber 14,15 bilden dabei mit ihren Wandbereichen 14a,15a die Unterbrechung des Formhohlraumes 3. Die beiden Schieber 14,15 bleiben auch während der Abkühlphase zur Erzeugung der Kunststoffwände 7 im Formhohlraum 3 (Figur 6). Diese Wände entstehen dadurch, daß sich der Kunststoff 4 im Bereich der Werkzeuginnenwände 1a schneller abkühlt als in seiner Mitte. Es verbleibt die noch fließfähige Seele 6.

Nach Abschluß der Abkühlphase wird der Schieber 14, wie in Figur 7 dargestellt, aus dem Formhohlraum 3 herausgezogen, wodurch der Kanal K geöffnet ist. Mittels einer Einspritzdüse bzw. -nadel 16, die schon vor, während oder z.B. auch erst nach der Abkühlphase in den Formhohlraum 3 einfahrbar bzw. positionierbar ist, wird anschließend Gas G in den mit noch fließfähigem Kunststoff angefüllten Bereich 6 des Formhohlraums 3 gedrückt. Die Einströmstelle 16 für das Gas sollte dabei möglichst nahe zur Wand 15a liegen.

Durch das bei 16 einströmende Gas wird der flüssige Kunststoff 6 am anderen Ende des durch die Schieber 14,15 geteilten Formhohlraums 3 durch den Kanal K in die Nebenkavität 10 gedrückt. Hierdurch entsteht der Hohlraum 11 des Kunststoffteils. Bevor der gesamte noch flüssige Kunststoff 6 aus dem Formhohlraum 3 gedrückt ist, wird, wie in Figur 8 dargestellt, der Schieber 15, der den Kanal K aufweist, aus dem Formhohlraum 3 soweit herausgezogen, daß seine Stirnseite 15b mit der Werkzeuginnenwand 1a fluchtet. Durch das Gas G wird der noch im Hohlraum 11 verbliebene Teil des noch flüssigen Kunststoffes 6 gegen die Stirnseite 15b gedrückt und bildet nach dem Erkalten mit dem schon während der Abkühlphase gehärteten Kunststoff 7 eine plane Fläche. Der noch im Kanal K verbleibende Kunststoff 12 kühlt während der Zeit bis zum nächsten Spritzvorgang ab und erhärtet. Durch das nach der nächsten Abkühlphase eingedrückte Gas wird dieser erhärteter Kunststoff 12 in die Nebenkavität 10 herausgedrückt.

### Bezugszeichenliste:

- 1: Werkzeug
- 1a: Innenwand des Werkzeugs 1
- 2: Angußkanal
- 3: Formhohlraum
- 4: fließfähige Kunststoffschmelze
- 5: Einspritzdüsen
- 5a: Öffnungen der Düsen im Bereich der plastischen und damit fließfähigen Seele 6
- 6: plastische Seele der eingespritzten Kunststoffschmelze 4
- 7: gehärteter Kunststoff, der die Außenwände des Kunststoffteils 8 bildet
- 8: Kunststoffteil
- 9: Kunststoffeinspritzdüse
- 10: Nebenkavität
- 11: erzeugter Hohlraum im Kunststoffteil 8
- 12: gehärteter Kunststoff im Kanal K
- 13: in Nebenkavität 10 austretender Kunststoff
- 14: Schieber zum Verschließen des Kanals K
- 14a: Wandbereich des Schiebers 14
- 14b: Stirnseite des Schiebers 14
- 14c: Bewegungsrichtung des Schiebers 14 bevor das Gas G in die plastische Seele 6 gedrückt wird
- 15: Schieber mit Kanal K
- 15a: Wandbereich des Schiebers 15
- 15b: Stirnseite des Schiebers 15
- 15c: Bewegungsrichtung des Schiebers 15 kurz bevor kein Gas G mehr in den Hohlraum 11 des Kunststoffteils 8 gepumpt bzw. gedrückt wird
- 16: Einspritzdüse für Gas G (vergleichbar mit Düse 5 des StdT)
- 17: Einlaßbereich des Gases G in die plastische Seele 6

- E: Extruderschnecke
- G: Gas
- K: Kanal
- S: Spritzeinheit
- W: Wände des fertigen Kunststoffteils 8

## Patentansprüche

1. Vorrichtung zum Spritzgießen von Kunststoffteilen (8) mit mindestens einem Hohlraum (10), der durch Eindrücken von Gas (G) entsteht, das die Kunststoffschmelze (4) aus dem Hohlraumbereich (3) über einen in der Form angeordneten Kanal (K), der sich vom Hohlraumbereich (3) hin zur Nebenkavität (10) stetig insbesondere konisch erweitert, in eine Nebenkavität (10) drückt, **dadurch gekennzeichnet**, daß der Kanal (K) in einem ersten Schieber (15) angeordnet ist, der in das Innere der Form hineinragt und nach dem Eindrücken von Gas (G) aus dem Inneren herausziehbar ist und daß neben dem ersten Schieber (15) ein zweiter Schieber (14) liegt, der zum Verschließen des Kanals (K) in das Innere der Form hineinragt und aus dem Inneren herausziehbar ist.

## Claims

1. A device for the injection moulding of plastics parts (8) having at least one cavity (10) produced by the pressing-in of gas (G), which forces the plastics melt (4) out of the cavity zone (3) into a subsidiary cavity (10) via a channel (K) which is disposed in the mould and widens constantly, more particularly conically, from the cavity zone (3) in the direction of the subsidiary cavity (10),
**characterised in that** the channel (K) is disposed in a first slide (15) which extends into the interior of the mould and, after the pressing-in of gas (G), can be withdrawn from said interior, while disposed alongside the first slide (15) is a second slide (14) which extends for the closure of the channel (K) into the interior of the mould and can be withdrawn from said interior.

## Revendications

1. Dispositif de moulage par injection de pièces en matière synthétique (8) avec au moins un volume creux (10), qui se produit par injection de gaz (G) qui comprime la masse fondue de matière synthétique (4) depuis la zone (3) du volume creux dans une cavité secondaire (10) par l'intermédiaire d'un canal (K) disposé dans le moule qui s'élargit de manière continue, en particulier coniquement, depuis la zone (3) du volume creux en direction de la cavité secondaire (10),
**caractérisé en ce que** le canal (K) est disposé dans une première coulisse (15) qui fait saillie à l'intérieur du moule et peut être extraite de l'intérieur après l'injection de gaz (G) et qu'une seconde coulisse (14), qui fait saillie à l'intérieur du moule pour la fermeture du canal (K) et peut être extraite de l'intérieur est disposée à côté de la première coulisse (15).
